# EUROPEAN PATENT SPECIFICATION

(11) **EP 3 385 812 B1**
(45) Date of publication and mention of the grant of the patent: **14.10.2020**
(21) Application number: 18174688.4
(22) Date of filing: 26.06.2015
(51) Int. Cl.: G05D 1/06, G05D 1/10

(54) **METHOD AND SYSTEM FOR CONTROLLING THE FLIGHT OF AN AIRCRAFT SUBJECTED TO AT LEAST TWO REQUIRED TIME OF ARRIVAL CONSTRAINTS**
VERFAHREN UND SYSTEM ZUR STEUERUNG DES FLUGES EINES FLUGZEUGES MIT MINDESTENS ZWEI ERFORDERLICHEN ANKUNFTSZEITBESCHRÄNKUNGEN
PROCÉDÉ ET SYSTÈME POUR CONTRÔLER LE VOL D'UN AVION SOUMIS À AU MOINS DEUX CONTRAINTES D'HEURE D'ARRIVÉE REQUISES

(43) Date of publication of application: 10.10.2018
(62) Divisional of application: 15382338.0
(73) Proprietor: The Boeing Company, Chicago, IL 60606-2016 (US)
(72) Inventor: GARRIDO LOPEZ, DAVID, 28042 MADRID (ES)
(74) Representative: Clarke Modet & Co.

(56) References cited:
- WO-A1-02/093281
- US-B2- 8 150 565
- Michael R C Jackson: "2007 AIAA ATIO Conference Airborne Required Time of Arrival (RTA) Control and Integration with ATM", , 30 September 2007 (2007-09-30), XP055243409, Retrieved from the Internet: URL:https://smartech.gatech.edu/bitstream/ handle/1853/34301/19_2007-12-RTA-slides-fo r-E-Operations.pdf [retrieved on 2016-01-21]

## Description

### FIELD OF THE INVENTION

This disclosure relates to a method of controlling the flight of an aircraft subjected to at least two required time of arrival constraints and more specifically to a method to control the flight of an aircraft wherein the aircraft trajectory satisfies two required times of arrival at two different waypoints of a cruise-descent operation, by iterating the aircraft cruise speed and descent speed independently. The method of controlling the flight of the aircraft starts during the cruise phase and at least one of the waypoints lies in the descent phase of the flight. The disclosure also relates to the system for controlling the flight of an aircraft subjected to at least two required time of arrival constraints and to the computer program which, when executed, carries out the cited method.

### BACKGROUND OF THE INVENTION

Air Traffic Management modernization is evolving from Surveillance-Based Management (control based on knowing where aircraft are) toward Trajectory-Based Management (control based on knowing where aircraft will be). Due to this inherent dependency on trajectory prediction, this concept requires the aircraft trajectory to avoid large unpredictable deviations.

Most commercial aircraft have a Required Time of Arrival (RTA) function available which is potentially a very useful airside function to meet time constraints imposed by Air Traffic Management systems, and in particular, by Arrival Managers of an airport terminal area.

The aircraft trajectory under RTA control becomes predictable in the sense that the aircraft will hopefully reach the RTA target waypoint at the predicted (and required) time.

The RTA function of an aircraft is activated when the pilot sets a required time of arrival at a target waypoint ahead of the current position. An important application of the RTA function occurs when the airline, the Air Traffic Management, the pilot, or another authority, imposes an arrival time constraint close to the destination airport. In that case, the RTA function may be activated when the flight is still in cruise phase, but the target waypoint is well within the phase of descent. The function then predicts a trajectory that satisfies the time constraint, and modifies the flight speeds accordingly. However, current operational RTA functions consider only one RTA at a single waypoint.

If the flight is in cruise phase and the target waypoint is in the descent phase, a conventional RTA function does not predict trajectories varying cruise speed and descent speed, and more specifically cruise Mach speed and descent Calibrated Air Speed (CAS), independently. Instead, the conventional RTA function iterates over the Cost Index (CI) which couples Mach and CAS variations. Each CI defines a unique Mach/CAS combination, given the cruise altitude, weight, and meteorological conditions. The CI is used for the initial trajectory prediction as well as for speed corrections during the operation.

A Trajectory-Based Arrival Management System may set time windows at crucial waypoints, for instance, at a waypoint where more than one arrival converges, and later at a waypoint closer to runway approach in order to maintain the proper sequence of aircraft landing. Thus, imposing RTAs at two different waypoints would benefit the merging and spacing of the incoming traffic at both high altitudes and then closer to the final approach to the runway.

However, time deviations with respect to the initially estimated arrival times at intermediate waypoints cannot be prevented by conventional RTA functions. Current solutions, such as the one disclosed in patent document US8150565-B2, break the reference trajectory in as many trajectory segments as intermediate waypoints, and calculate a cruise/descent speed pair for each trajectory segment, wherein each cruise/descent speed pair meets the corresponding RTA at the intermediate waypoint ahead. This solution disregards arrival times beyond the next RTA waypoint and calculates a plurality of trajectories which necessarily implies a number of speed changes and more computational requirements. This solution is therefore, inefficient.

Current computer capabilities permit calculating many different flyable Mach/CAS combinations that are not coupled by the CI. Arbitrary cruise/descent speed pairs can be used to plan trajectories as long as speeds are within the boundaries of the aircraft speed limits.

### SUMMARY OF THE INVENTION

To achieve the advantages and avoid the drawbacks listed above, the present disclosure provides a significant improvement over existing solutions since it describes a method and a system for controlling the flight of an aircraft subjected to at least two required time of arrival constraints. The main objective of the present invention is to calculate a single trajectory that meets at least two required times of arrival at the corresponding different waypoints by considering independent changes of cruise speed and descent speed for trajectory predictions during execution of RTA function.

An embodiment of the present invention is a system according to claim 1.

For a cruise-descent operation, the aircraft trajectory is defined by the cruise speed and the descent speed. For typical cruise altitudes above 30000 ft., which is the case for a vast majority of commercial flights, the cruise speed is expressed as a Mach number. Most of the descent is generally flown at constant Calibrated Air Speed (CAS).

### BRIEF DESCRIPTION OF THE FIGURES

Figure 1.- Shows a first part of DIRTY Standard Arrival Procedure (STAR) of a flight arriving to the Atlanta International Airport.
Figure 2.- Shows a second part of DIRTY STAR of a flight arriving to the Atlanta International Airport, shown in figure 1.
Figure 3.- Shows the lateral path of the flight example shown in figures 1 and 2.
Figure 4.- Shows the pressure altitude (top graph) and Calibrate airspeed (bottom graph) of a typical continuous descent trajectory of a conventional commercial flight, as a function of flown distance.
Figure 5.- Shows the pressure altitude graph as a function of flown distance of the flight example of figures 1 to 3.
Figure 6.- Shows a isocontours graph of two estimated arrival times for two different RTA at two different waypoints for the flight example of figures 1 to 3 and 5, as a function of the descent CAS and the Cruise Mach and descent Mach. It also shows the conventional dependency of cruise Mach and descent CAS as a function of the Cost Index.
Figure 7.- Shows a isocontours graph wherein a comparison of the speeds calculated to meet the respective time constraints at the two waypoints when functions activated and the corrected speeds at a later time.
Figure 8.- Shows a flow diagram in which a particular embodiment of the method of the invention is disclosed.

### DETAILED DESCRIPTION OF THE INVENTION

Next, a description of several examples of particular embodiments of the present invention is carried out, with illustrative character and without limitation, making reference to the numbering used in the figures.

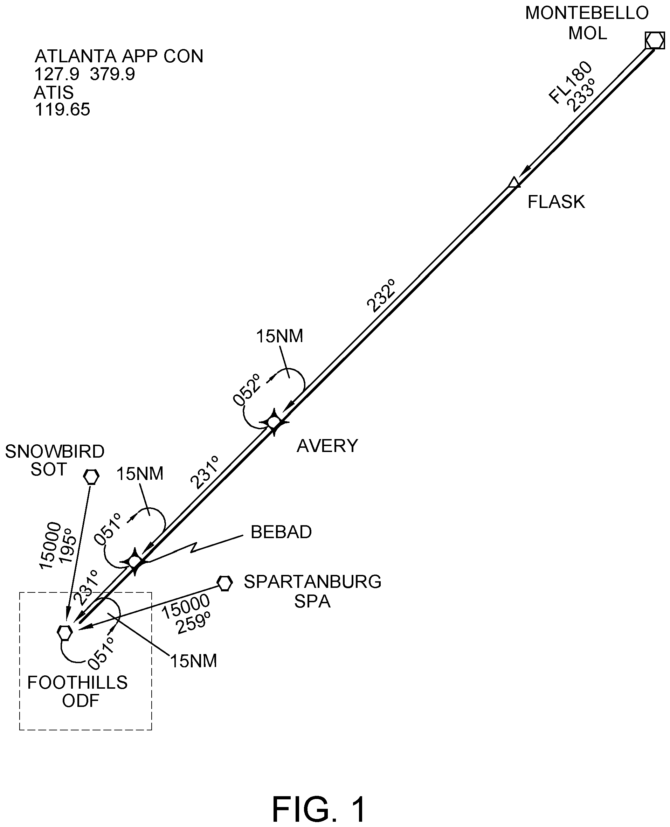

In a particular example of the method proposed in the present disclosure is provided a flight with the following conditions:
- Aircraft: Boeing 737-800
- Initial conditions: cruising at an altitude of 35000 ft., at maximum landing weight (MLW = 144,000 lbs.).
- The lateral path of the flight is a standard arrival into Atlanta International Airport (see figures 1, 2, and 3).
- Weather conditions: No winds, and standard atmosphere.

For typical cruise altitudes above 30000 ft., which is the case for a vast majority of commercial flights and for this particular example, the cruise speed is expressed as a Mach number. Most of the descent is generally flown at constant Calibrated Air Speed (CAS).

The initial point of the aircraft for this particular example is "Montebello (MOL)". A few miles into the arrival, when the along-track distance to waypoint "DIRTY" is 200 NM, the pilot sets a RTA at waypoint "DIRTY". Additionally, the pilot also sets a different RTA at waypoint "Foothills (ODF)", which is 50 NM before reaching waypoint "DIRTY". For this particular example only two RTA's at two target waypoints have been set, although more RTA's at different waypoints might be set too.

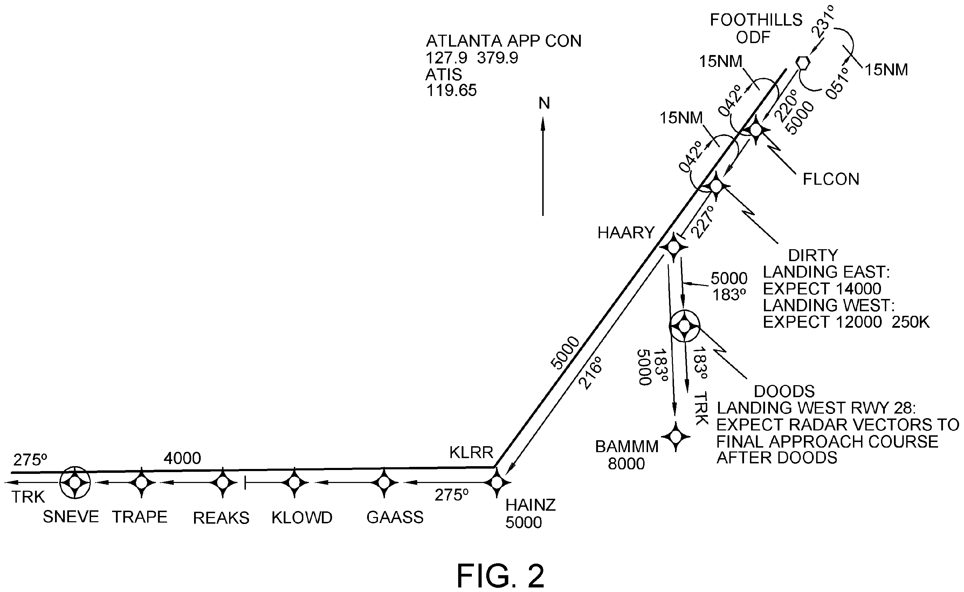

Figures 1 and 2 show the flight details of a selected arrival procedure of an aircraft. This arrival procedure is a part of a flight that ends at runaway "08L" of the Atlanta International Airport (KATL). Details of the aircraft approach operation to the airport are not shown since they do not affect to the RTA problem described herein. More specifically, figure 1 shows a first part of the "DIRTY" transition route for arriving to the Atlanta International Airport and figure 2 shows the second part of said "DIRTY" transition route. "DIRTY" is an important metering fix because it is a few miles before the aircraft is directed to the particular runway approach (see points "Haary" and "Doods" in figure 2), and a correct spacing between aircraft is crucial over there to ensure a correct spacing at the runways. In "ODF" three different transitions to the arrival converge, specifically, a first transition from "Montebello (MOL)", a second transition from "Snowbird (SOT)" and a third transition from "Spartanburg (SPA)". Then, at least three aircrafts might merge in waypoint "ODF" at the same time with the corresponding conflicts and subsequent safety risks that it might cause. Therefore, the timing where aircraft arrive to this waypoint is crucial in order to merge the traffic flow while ensuring minimum separations between aircrafts and so avoiding conflicts. Therefore, the necessity of establishing a first RTA at "ODF" and a second RTA at "DIRTY" can be derived in order to minimize conflicts and risks.

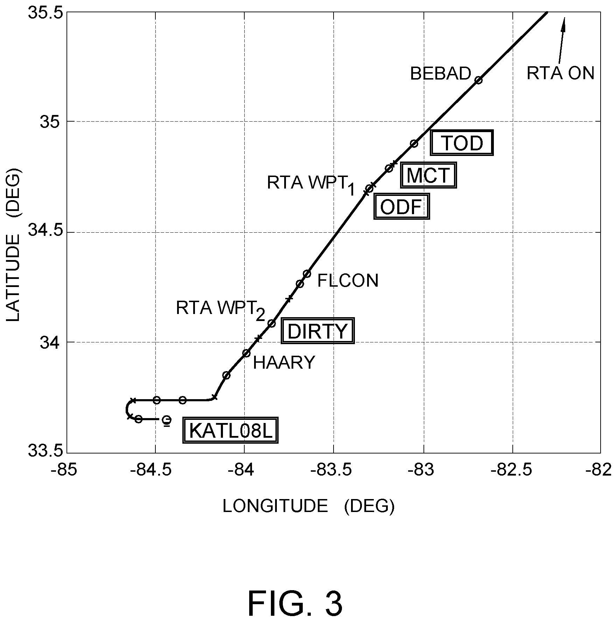

Figure 3 shows the lateral path of the flight example of figures 1 and 2 starting from the instant in which the pilot turns on the RTA function at "Montebello MOL" until the aircraft is landed at the corresponding runaway of the Atlanta Airport ("KATL08L"). More specifically, it shows the position of waypoint "ODF" (RTA WPT₁ hereafter) and waypoint "DIRTY" (RTA WPT₂ hereafter) relative to the lateral path of the flight example. RTA WPT₁ is shortly after the beginning of descent (Top of descent "TOD") and the initial Mach to CAS transition location (MCT). RTA WPT₂ has an altitude constraint of 14000 ft. and is more than 2/3 into the descent. Other intermediate waypoints as BEBAD, FLCON and HAARY are shown in order to clearly define the lateral path of the aircraft. In this particular example, both waypoints have been set during the descent phase of the flight.

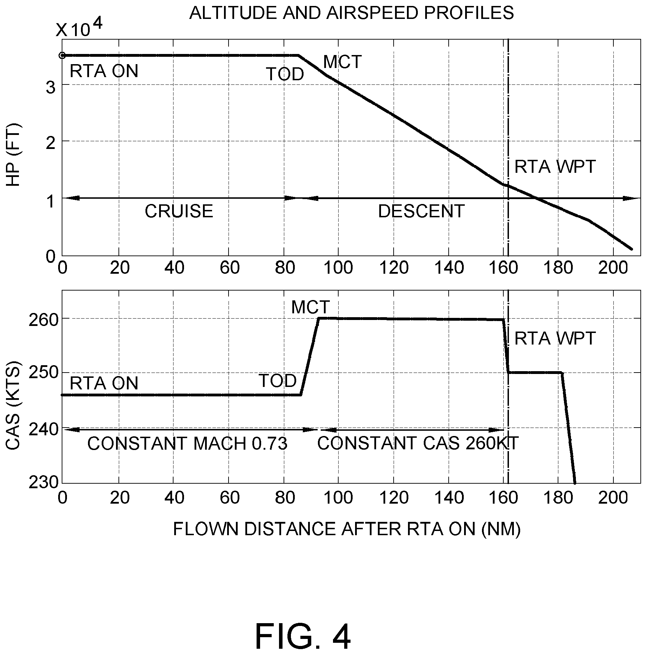

Figure 4 shows a typical example of pressure altitude and Calibrate Airspeed (CAS) as a function of the along-track distance for an arrival procedure of a commercial flight (not of this particular example). Specifically the upper graph shows the altitude profile of a commercial flight as a function of the along track distance where the graph shows the distance from the instant in which the pilot turn on the RTA function until the aircraft is landed, which takes about 205NM. This upper graph shows the Top of Descent point (TOD) and the Mach to CAS transition (MCT) point at which the aircraft changes from the cruise phase to the descent phase. The cruise altitude of the aircraft is around 35000 ft. The only waypoint established for this particular example is located at 162NM from the position in which the pilot turns on the RTA function. The bottom graph shows the airspeed profiles of the aircraft during the cruise/descent operation. Specifically, during the cruise phase and the beginning of the descent phase (until the aircraft arrives to the MCT point) the aircraft flights with a constant Mach number of 0.73 and during the descent phase the aircraft flights at a constant CAS speed of 260KT. Before reaching the destination airport, the aircraft reduces its speed (this is not shown in the figure).

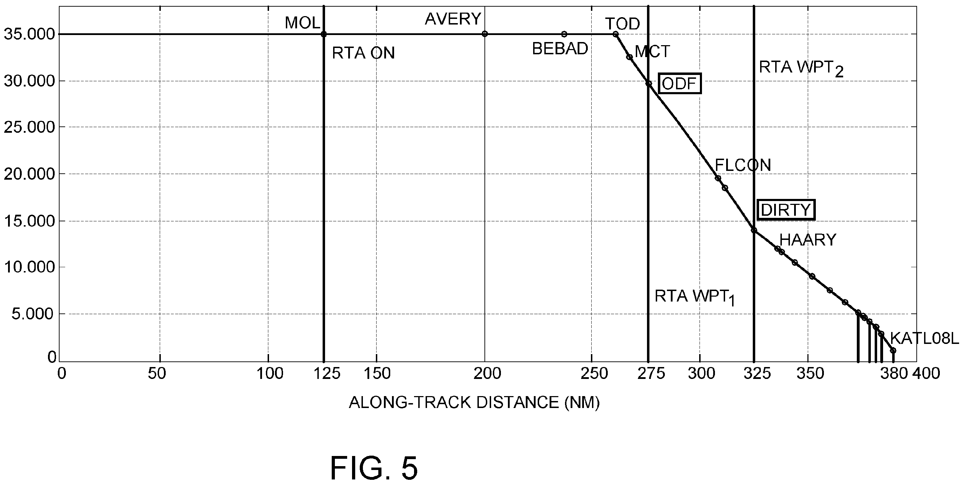

Figure 5 shows the pressure altitude profile as a function of the along track distance for the particular example of figures 1, 2 and 3. For this particular example, the RTA function is turned on at "MOL" (not shown) during the cruise phase and 255NM before arriving to the destination airport "KATL08L". The RTA WPT₂ is set at "DIRTY" that is located in the descent phase of the aircraft. The along-track distance from "MOL" to waypoint "DIRTY" is 200 NM. The RTA WPT₁ is set at "ODF" which is located 50NM before "DIRTY" and 105NM before "KATL08L". "ODF" is also set in the descent phase of the aircraft.

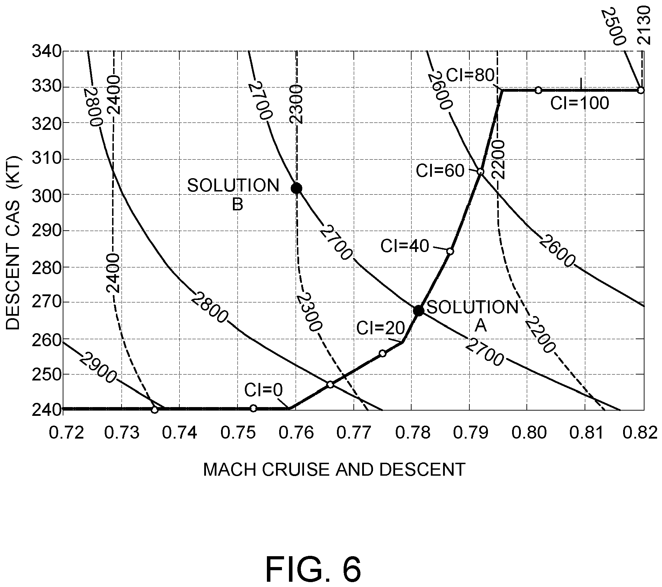

Figure 6 shows the predicted arrival times for RTA WPT₁ and RTA WPT₂ as a function of the cruise Mach and descent CAS for the flight example of figures 1, 2, 3 and 5. The boundaries of this diagram are the Mach and CAS limits. For this particular example the RTA function will never program CAS speeds below 240 KT or above 330 KT, and will never program Mach speeds below 0.72 or above 0.82. These speed limits correspond to the case of an aircraft flying at an altitude of 35000 ft. and with a weight of 144,000 lbs. In general, speed limits depend on weight and altitude. The graph represents two overlapped contour maps as a function of cruise Mach and descent CAS: the dashed isocontours represent estimated arrival times at the RTA WPT₁, and the thin solid isocontours represent estimated arrival times at the RTA WPT₂. Times are shown in seconds, and the reference t=0 represents the moment when the pilot activates the RTA function. There is a plurality of combinations of Mach/descent CAS speeds that meet the selected RTA at each one of the selected waypoints.

Each isocontour represents a plurality of Mach/CAS combinations that meets the required time of arrival. Therefore, for a particular embodiment wherein the required time of arrival would be 2200 seconds (36 min and 40 seconds) at waypoint "ODF", the dashed isocontour tagged with "2200" in figure 6 would represent all the possible Mach/CAS combinations that could meet said RTA at said waypoint (within the corresponding aircraft speed limits) .

By inspection of figure 6, the earliest time of arrival that can be achieved for RTA WPT₁ (at waypoint "ODF") in this particular case (considering the aircraft speed limits) is 2130 seconds approx. (35 min. and 30 s. past initial time) flying at M=0.82 and CAS=330 KT. The latest time of arrival that can be achieved is 2445 seconds, (40:45 past initial time), flying at M=0.72 and CAS=240 KT (line not shown). For RTA WPT₂ (at waypoint "DIRTY") the minimum time is about 2500 seconds (41:40 past initial time) flying at M=0.82 and CAS=330 KT, and maximum achievable time is 2920 seconds (48:40 past initial time) flying at M=0.72 and CAS=240 KT (line not shown).

Figure 6 also shows the possible cruise Mach and descent CAS combinations as a function of Cost Index (see black dash-dot line superposed to the diagram). Current Flight Management Computers (FMC) iterate over CI to find the Mach/CAS combination that satisfies a given RTA. For this particular example, the pilot enters for RTA WPT₂ (waypoint "DIRTY") a single RTA= initial time + 45 min, as requested by the Arrival Manager. Then the computer will find the trajectory corresponding to the intersection of RTA = 2700s (solid isocontour tagged with 2700) and the Cost Index line. The resulting CI is close to 30 approximately, and the corresponding speeds are M=0.782 CAS=268 KT. This solution is marked as "Solution A" in figure 6 and the cited speeds are the only combination that meets the single RTA at waypoint "DIRTY" as a function of the CI. A given Cost Index implies a balance between fuel and operational costs. If the airline would impose a specific CI close to zero (corresponding to the minimum-fuel consumption trajectory) then the previous RTA could not be met. Besides if the cited Mach/CAS combination (M=0.782 CAS=268 KT) is selected then the only required time of arrival at a second waypoint ahead would be restricted to these aircraft speeds.

In the case in which, in order to avoid conflict with other aircraft merging at "ODF" (RTA WPT₁), the Arrival Manager determines that the aircraft should pass intermediate waypoint "ODF" at a required time of arrival RTA₁=2300 seconds (initial time plus 38:20), the solution provided by the conventional CI-coupled Mach/CAS combination ("Solution A") would not be valid for meeting the time constraint at RTA WPT₁, since "Solution A" leads to an arrival time equal to initial time plus 2225 s. (37:05), which is more than one minute early. A conventional RTA function cannot find a single trajectory that satisfies two time constraints (with some highly unlikely exceptions).

It is clear from Figure 6 that many different Mach/CAS pairs lead to a trajectory satisfying the RTA₂= 2700s at waypoint "DIRTY" other than the CI-coupled pair. These combinations are represented by the thin solid isocontour RTA₂= 2700s. Therefore, it is possible to search for the intersection of this isocontour with the dashed isocontour RTA₁= 2300s, which represents the required arrival time at waypoint "ODF". Therefore, in order to meet both constraints, the aircraft simply has to select the speeds Mach=0.76 and CAS=302 KT, something that is not possible if the aircraft uses CI solutions. This is represented in figure 6 as "Solution B". If more RTA's at different waypoints would be added, the solution would be the intersection of all the isocontours corresponding to each one of the RTA at their corresponding waypoints.

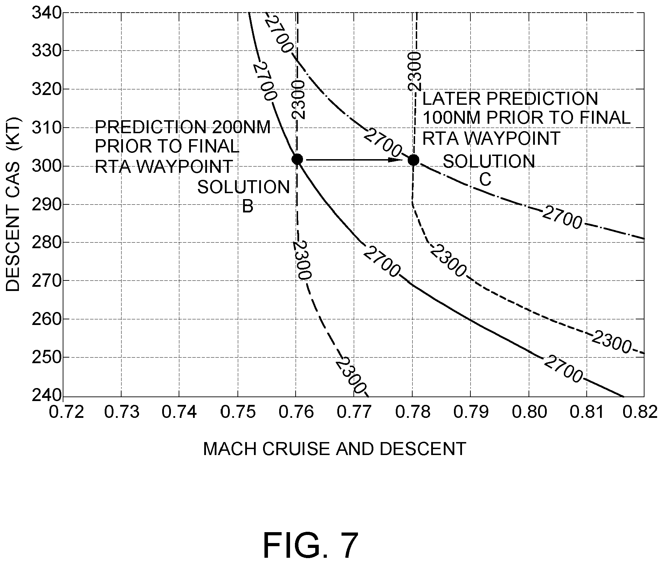

During the operation, uncertainties, such as wind forecast errors, may force the RTA function to recalculate the trajectory and correct the flight speeds in order to meet the RTA. This situation is depicted in figure 7. In this particular example and as explained in the previous paragraph, the aircraft firstly selects the speeds Mach=0.76 and CAS=302 KT to meet RTA WPT₁ and RTA WPT₂ when it is 200NM away from waypoint "DIRTY". After 100 NM the aircraft, which is continuously and dynamically monitoring the distances, speeds and estimated time of arrival, finds out significant time errors at both waypoints if the aircraft follows the trajectory given by the original cruise and descent speeds. Then, the aircraft recalculates the new isocontours of estimated arrival times. At this point the aircraft is about 50NM away from waypoint "ODF" and 100NM away from "DIRTY". The method searches for the new intersection of RTA₁= 2300s and RTA₂= 2700s. For these conditions and in order to meet both constraints, the aircraft has to correct its reference trajectory by selecting speeds Mach=0.78 and CAS=302 KT. This is represented in figure 7 as "Solution C".

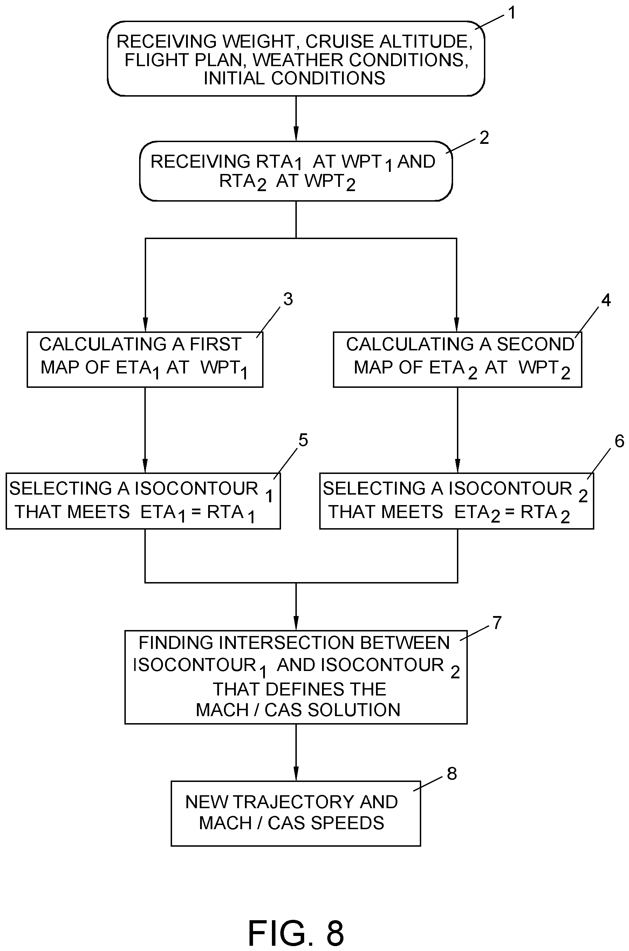

Figure 8 shows a flow diagram of a particular embodiment of the method of the present invention wherein only two RTA's are provided. The flow diagram comprises the following steps:
- receiving (1) a set of given conditions, said given conditions at least comprising the weight of the aircraft, the cruise altitude, the flight plan, the weather conditions and the initial conditions, at the time in which the RTA function is activated;
- receiving (2) a first required time of arrival (RTA₁) a first waypoint (WPT₁) ahead and a second required time of arrival (RTA₂) at a second waypoint ahead (WPT₂);
- calculating (3) a first map of estimated time of arrivals (ETA₁) at the first waypoint "WPT₁" within the speed limits and under the given conditions. Said first map is function of the cruise Mach and decent CAS of the aircraft. This is represented by the set of dashed isocontours of figure 6. Depending on CPU capabilities, this map can be calculated with more or less accuracy, but in principle it is simply a matter or calculating arrival times for a 2D grid of cruise Mach and descent CAS values. In figure 6, a total of 121 conditions (11 cruise Mach x 11 descent CAS) were used. Then, selecting (5) the only isocontours (isocontour₁) corresponding to the first required time of arrival (RTA₁) at "WPT₁" by finding the descent CAS that makes ETA₁=RTA₁ for a given cruise Mach or by finding the cruise Mach that makes ETA₁= RTA₁ for a given descent CAS;
- calculating (4) a second map of estimated time of arrivals (ETA₂) at the second waypoint "WPT₂" within the speed limits and under the given conditions. Said second map is function of the cruise Mach and decent CAS of the aircraft. This is represented by the thin solid isocontours of figure 6. Then, selecting (6) the only isocontour (isocontour₂) corresponding to the second required time of arrival (RTA₂) at "WPT₂" by finding the descent CAS that makes ETA₂= RTA₂ for a given cruise Mach or by finding the cruise Mach that makes ETA₂= RTA₂ for a given descent CAS;
- finding (7) the intersection of the selected "isocontouri" and the "isocontour₂". This intersection defines the solution and the required cruise Mach and descent CAS combination; and,
- selecting (9) the cruise Mach and descent CAS, and so establish the new reference trajectory.

Since the use of maps and isocontours is a particular embodiment of the method described in the present application, in a most general solution, the method calculates a first set of Mach/CAS combinations that meets an ETA₁ at the WPT₁ and selects a first subset of Mach/CAS combinations, from the first set of Mach/CAS combinations, for which ETA₁=RTA₁. Then the method calculates a second set of Mach/CAS combinations that meets an ETA₂ at the WTA₂ and selects a second subset of Mach/CAS combinations, from the second set of Mach/CAS combinations, for which ETA₂=RTA₂. After that, the method compares the Mach/CAS combinations of the first subset with the Mach/CAS combinations of the second subset, selecting the only Mach/CAS combination existing in both subsets. This selection may be made by using a conventional two dimensional root-finding algorithm such as the Broyden's method. Other methods might be used for finding the root of the functions that define the sets of Mach/CAS combinations. Finally the method establishes a new reference trajectory based on the selected cruise Mach and descent CAS speeds combination.

The method herein disclosed permits to select a trajectory that meets at least two time constraints at different waypoints.

## Claims

1. A system, comprising:
a flight management computer suitable for being in communication with a trajectory generator and a speed profile generator, the flight management computer configured to:
receive a first time of arrival (RTA₁) at a first target waypoint (WPT₁) of an aircraft during flight and a second time of arrival (RTA₂) at a second target waypoint (WPT₂) of the aircraft during the flight, the second target waypoint (WPT₂) being different than the first target waypoint (WPT₁) and both first target waypoint (WPT₁) and second target waypoint (WPT₂) corresponding to a descent phase of the flight;
determine a first set of cruise speed and descent speed pairs corresponding to the first time of arrival (RTA₁), the first set satisfying the first time of arrival (RTA₁) at the first target waypoint (WPT₁);
determine a second set of cruise speed and descent speed pairs corresponding to the second time of arrival (RTA₂), the second set satisfying the second time of arrival (RTA₂) at the second target waypoint (WPT₂);
select a cruise speed and descent speed pair existing in each one of the first and second sets;
determine an aircraft trajectory that satisfies the selected cruise speed and descent speed pair; and
cause at least one of: 1) the aircraft to travel along the aircraft trajectory or 2) the aircraft trajectory to be displayed.

2. The system of claim 1, wherein determining the first set includes at least one of obtaining a descent speed that satisfies the first time of arrival (RTA₁) for a given cruise speed or obtaining a cruise speed that satisfies the first time of arrival (RTA₁) for a given descent speed.

3. The system of claim 1 or 2, wherein determining the second set includes at least one of obtaining a descent speed that satisfies the second time of arrival (RTA₂) for a given cruise speed or obtaining a cruise speed that satisfies the second time of arrival (RTA₂) for a given descent speed.

4. The system of any one of claims 1-3, wherein selecting the cruise speed and descent speed pair includes executing a root-finding algorithm.

5. The system of any one of claims 1-4, wherein determining the first set and the second set includes:
establishing a first contour map including a first isocontour, the first isocontour associated with the first set of cruise speed and descent speed pairs; and
establishing a second contour map including a second isocontour, the second isocontour associated with the second set of cruise speed and descent speed pairs.

6. The system of claim 5, wherein the aircraft trajectory is based on an intersection between the first isocontour and the second isocontour.

7. The system of any one of claims 1-6, wherein determining at least one of the first set or the second set is based on at least one of one or more flight conditions, a weight of the aircraft, a cruise altitude of the aircraft, a speed range of the aircraft, measured wind, a flight plan, a weather forecast, or a temperature.

8. The system of any one of claims 1-7, comprising:
the speed profile generator in communication with the flight management computer, the speed profile generator configured to:
receive the cruise speed and descent speed pair selected by the flight management computer; and
generate a speed profile signal based on the cruise speed and descent speed pair; and
the trajectory generator in communication with the flight management computer, the trajectory generator configured to:
receive the speed profile signal; and
generate the aircraft trajectory based on the speed profile signal, the aircraft trajectory satisfying the first time of arrival (RTA₁) at the first target waypoint (WPT₁) and the second time of arrival (RTA₂) at the second target waypoint (WPT₂).

## Patentansprüche

1. System, umfassend:
einen Flugmanagementcomputer, der geeignet ist, um mit einem Flugbahngenerator und einem Geschwindigkeitsprofilgenerator in Verbindung zu stehen, wobei der Flugmanagementcomputer konfiguriert ist, um:
eine erste Ankunftszeit (RTA₁) an einem ersten Zielwegpunkt (WPT₁) eines Flugzeugs während dem Flug und eine zweite Ankunftszeit (RTA₂) an einem zweiten Zielwegpunkt (WPT₂) des Flugzeugs während dem Flug zu erhalten, wobei sich der zweite Zielwegpunkt (WPT₂) von dem ersten Zielwegpunkt (WPT₁) unterscheidet und sowohl der erste Zielwegpunkt (WPT₁) als auch der zweite Zielwegpunkt (WPT₂) einer Sinkflugphase des Fluges entsprechen;
einen ersten Satz von Reisefluggeschwindigkeits- und Sinkfluggeschwindigkeitspaaren entsprechend der ersten Ankunftszeit (RTA₁) zu bestimmen, wobei der erste Satz der ersten Ankunftszeit (RTA₁) an dem ersten Zielwegpunkt (WPT₁) entspricht;
einen zweiten Satz von Reisefluggeschwindigkeits- und Sinkfluggeschwindigkeitspaaren entsprechend der zweiten Ankunftszeit (RTA₂) zu bestimmen, wobei der zweite Satz der zweiten Ankunftszeit (RTA₂) an dem zweiten Zielwegpunkt (WPT₂) entspricht;
ein Reisefluggeschwindigkeits- und Sinkfluggeschwindigkeitspaar auszuwählen, das in jedem des ersten und des zweiten Satzes vorhanden ist;
eine Flugzeugflugbahn zu bestimmen, die dem ausgewählten Reisefluggeschwindigkeits- und Sinkfluggeschwindigkeitspaar entspricht; und
mindestens eine der folgenden Aktionen zu bewirken: 1) das Flugzeug fliegt entlang der Flugzeugflugbahn oder 2) die Flugzeugflugbahn wird angezeigt.

2. System nach Anspruch 1, wobei das Bestimmen des ersten Satzes mindestens eines des Erhaltens einer Sinkfluggeschwindigkeit, die der ersten Ankunftszeit (RTA₁) für eine gegebene Reisefluggeschwindigkeit entspricht, oder des Erhaltens einer Reisefluggeschwindigkeit, die der ersten Ankunftszeit (RTA₁) für eine gegebene Sinkfluggeschwindigkeit entspricht, umfasst.

3. System nach Anspruch 1 oder 2, wobei das Bestimmen des zweiten Satzes mindestens eines des Erhaltens einer Sinkfluggeschwindigkeit, die der zweiten Ankunftszeit (RTA₂) für eine gegebene Reisefluggeschwindigkeit entspricht, oder des Erhaltens einer Reisefluggeschwindigkeit, die der zweiten Ankunftszeit (RTA₂) für eine gegebene Sinkfluggeschwindigkeit entspricht, umfasst.

4. System nach einem der Ansprüche 1-3, wobei das Auswählen des Reisefluggeschwindigkeits- und Sinkfluggeschwindigkeitspaars das Ausführen eines Wurzelsuchalgorithmus umfasst.

5. System nach einem der Ansprüche 1-4, wobei das Bestimmen des ersten Satzes und des zweiten Satzes Folgendes umfasst:
Erstellen einer ersten Konturenkarte einschließlich einer ersten Isokontur, wobei die erste Isokontur mit dem ersten Satz von Reisefluggeschwindigkeits- und Sinkfluggeschwindigkeitspaaren verknüpft ist; und
Erstellen einer zweiten Konturenkarte einschließlich einer zweiten Isokontur, wobei die zweite Isokontur mit dem zweiten Satz von Reisefluggeschwindigkeits- und Sinkfluggeschwindigkeitspaaren verknüpft ist.

6. System nach Anspruch 5, wobei die Flugzeugflugbahn auf einem Schnittpunkt zwischen der ersten Isokontur und der zweiten Isokontur basiert.

7. System nach einem der Ansprüche 1-6, wobei das Bestimmen mindestens eines des ersten Satzes oder des zweiten Satzes auf mindestens einer oder einem von einer oder mehreren Flugbedingungen, einem Gewicht des Flugzeugs, einer Reiseflughöhe des Flugzeugs, einem Geschwindigkeitsbereich des Flugzeugs, dem gemessenen Wind, einem Flugplan, einer Wettervorhersage oder einer Temperatur basiert.

8. System nach einem der Ansprüche 1-7, umfassend:
den Geschwindigkeitsprofilgenerator, der mit dem Flugmanagementcomputer in Verbindung steht, wobei der Geschwindigkeitsprofilgenerator konfiguriert ist, um:
das Reisefluggeschwindigkeits- und Sinkfluggeschwindigkeitspaar, das durch den Flugmanagementcomputer ausgewählt wird, zu erhalten; und
ein Geschwindigkeitsprofilsignal basierend auf dem Reisefluggeschwindigkeits- und Sinkfluggeschwindigkeitspaar zu erzeugen; und
den Flugbahngenerator in Verbindung mit dem Flugmanagementcomputer, wobei der Flugbahngenerator konfiguriert ist, um:
das Geschwindigkeitsprofilsignal zu empfangen; und
die Flugzeugflugbahn basierend auf dem Geschwindigkeitsprofilsignal zu erzeugen, wobei die Flugzeugflugbahn der ersten Ankunftszeit (RTA₁) an dem ersten Zielwegpunkt (WPT₁) und der zweiten Ankunftszeit (RTA₂) an dem zweiten Zielwegpunkt (WPT₂) entspricht.

## Revendications

1. Un système, comprenant :
un ordinateur de gestion de vol adapté pour être en communication avec un générateur de trajectoire et un générateur de profil de vitesse, l'ordinateur de gestion de vol étant configuré pour :
recevoir une première heure d'arrivée (RTA₁) à un premier point de destination (WPT₁) d'un aéronef pendant le vol et une deuxième heure d'arrivée (RTA₂) à un deuxième point de destination (WPT₂) de l'aéronef pendant le vol, le deuxième point de destination (WPT₂) étant différent du premier point de destination (WPT₁) et les deux premier point de destination (WPT₁) et deuxième point de destination (WPT₂) correspondant à une phase de descente du vol ;
déterminer un premier ensemble de paires de vitesse de croisière et de vitesse de descente correspondant à la première heure d'arrivée (RTA₁), le premier ensemble satisfaisant la première heure d'arrivée (RTA₁) au premier point de destination (WPT₁) ;
déterminer un deuxième ensemble de paires de vitesses de croisière et de descente correspondant à la deuxième heure d'arrivée (RTA₂), le deuxième ensemble satisfaisant la deuxième heure d'arrivée (RTA₂), au deuxième point de destination (WPT₂) ;
sélectionner une paire de vitesse de croisière et de vitesse de descente existant dans chacun des premier et deuxième ensembles ;
déterminer une trajectoire d'avion qui satisfait la paire de vitesse de croisière et vitesse de descente sélectionnée ; et
causer au moins une de : 1) l'avion se déplace le long de la trajectoire de l'avion ou 2) la trajectoire de l'avion est affichée.

2. Le système de la revendication 1, dans lequel la détermination du premier ensemble comprend au moins l'une des étapes consistant à obtenir une vitesse de descente qui satisfait le premier temps d'arrivée (RTA₁) pour une vitesse de croisière donnée ou à obtenir une vitesse de croisière qui satisfait le premier temps d'arrivée (RTA₁) pour une vitesse de descente donnée.

3. Le système de la revendication 1 ou 2, dans lequel la détermination du premier ensemble comprend au moins l'une des étapes consistant à obtenir une vitesse de descente qui satisfait le premier temps d'arrivée (RTA₂) pour une vitesse de croisière donnée ou à obtenir une vitesse de croisière qui satisfait le premier temps d'arrivée (RTA₂) pour une vitesse de descente donnée.

4. Système selon l'une quelconque des revendications 1 à 3, dans lequel la sélection de la paire de vitesse de croisière et de vitesse de descente comprend l'exécution d'un algorithme de recherche de racine.

5. Système de l'une quelconque des revendications 1 à 4, dans lequel la détermination du premier ensemble et du second ensemble comprend :
l'établissement d'une première carte de contour comprenant un premier isocontour, le premier isocontour étant associé au premier ensemble de paires de vitesse de croisière et de vitesse de descente ; et
l'établissement d'une deuxième carte de contour comprenant un deuxième isocontour, le deuxième isocontour étant associé au deuxième ensemble de paires de vitesse de croisière et de vitesse de descente ; et

6. Le système de la revendication 5, dans lequel la trajectoire de l'avion est basée sur une intersection entre I premier isocontour et le deuxiem isocontour.

7. Le système de l'une quelconque des revendications 1 à 6, dans lequel la détermination d'au moins l'un du premier ensemble ou du second ensemble est basée sur au moins l'une d'une ou plusieurs conditions de vol, un poids de l'aéronef, une altitude de croisière de l'aéronef, une plage de vitesse de l'aéronef, un vent mesuré, un plan de vol, une prévision météorologique ou une température.

8. Le système de l'une des revendications 1 à 7, comprenant :
le générateur de profil de vitesse en communication avec l'ordinateur de gestion de vol, le générateur de profil de vitesse configuré pour :
recevoir la paire de vitesse de croisière et vitesse de descente sélectionnée par l'ordinateur de gestion de vol ; et
générer un signal de profil de vitesse basé sur la paire de vitesse de croisière et vitesse de descente
le générateur de trajectoire en communication avec l'ordinateur de gestion de vol, le générateur de trajectoire étant configuré pour :
recevoir le signal de profil de vitesse ; et
générer la trajectoire de l'avion sur la base du signal de profil de vitesse, la trajectoire de l'avion satisfaisant la première heure d'arrivée (RTA₁) au premier point de destination (WPT₁) et la deuxième heure d'arrivée (RTA₂) au deuxième point de destination (WPT₂).
